Europäisches Patentamt

European Patent Office

Office européen des brevets

(19)

(11) Numéro de publication : **0 165 244**
**B1**

(12) **FASCICULE DE BREVET EUROPÉEN**

(45) Date de publication du fascicule du brevet :
20.01.88

(51) Int. Cl.⁴ : **B 21 D 39/02**, B 23 Q 7/04

(21) Numéro de dépôt : **84901312.3**

(22) Date de dépôt : **22.03.84**

(86) Numéro de dépôt international :
**PCT/BE 84/00009**

(87) Numéro de publication internationale :
**WO/8403849 (11.10.84 Gazette 84/24)**

(54) PERFECTIONNEMENT AUX DISPOSITIFS D'ASSEMBLAGE DE CORPS CREUX PAR SERTISSAGE.

(30) Priorité : **31.03.83 LU 84728**

(43) Date de publication de la demande :
**27.12.85 Bulletin 85/52**

(45) Mention de la délivrance du brevet :
**20.01.88 Bulletin 88/03**

(84) Etats contractants désignés :
**AT BE CH DE FR GB LI LU NL SE**

(56) Documents cités :
BE-A- 708 126
CH-A- 270 899
DE-A- 1 752 573
DE-A- 2 214 587
DE-A- 2 358 177
DE-A- 2 501 439
DE-A- 2 734 999
DE-C- 610 711
FR-A- 907 439
FR-A- 947 541
GB-A- 1 599 379
NL-A- 7 508 981
US-A- 220 991
US-A- 1 873 164
US-A- 2 460 123
US-A- 4 345 866
Patents Abstracts of Japan, volume 6, no. 220 (M 169)
(1098) 5 novembre 1982, JP, A, 57124524 (JIDOSHA) 3
août 1982

(73) Titulaire : **SPIRO MACHINES S.A.**
**Industriestrasse**
**CH-3178 Bösingen (CH)**

(72) Inventeur : **ROSY, Etienne**
**Rue de Bomal 7**
**B-5940 Ramillies (BE)**
Inventeur : **LAGASSE, Paul-Emile**
**Rue de la Neuveville 70**
**B-1348 Louvain-La-Neuve (BE)**

(74) Mandataire : **Van Malderen, Michel et al**
**p.a. Freylinger & Associés 22 avenue J.S. Bach (bte 43)**
**B-1080 Bruxelles (BE)**

## Description

La présente invention concerne un dispositif permettant d'assembler par sertissage vertical (simple) deux corps creux à paroi mince, éventuellement à symétrie de révolution, notamment des tubes, coudes ou éléments de réduction coniques destinés au transport de l'air dans une installation de climatisation, par exemple.

Le document US-A-2 460 123 expose un dispositif d'assemblage de corps creux par sertissage vertical, avec un mandrin d'appui monté sur un support rotatif, un galet de sertissage composé d'au moins deux éléments, à savoir un galet support et un galet d'écrasement, ces deux galets étant montés de manière à pouvoir être déplacés en direction du mandrin d'appui pour effectuer un prépliage des bords par déformation entre deux lèvres fixes, ces deux galets étant également rapprochables l'un de l'autre pour permettre le sertissage des bords des éléments à assembler, l'un au moins des éléments, galets et mandrin précités pouvant être entraîné en rotation par un organe moteur. Le dispositif ainsi décrit ne permet néanmoins pas l'assemblage par sertissage de corps creux courbes. Par ailleurs, il est encombrant et de construction complexe et compliquée.

La présente invention vise à fournir un autre dispositif du type susmentionné.

Le but de la présente invention est atteint en fournissant un dispositif d'assemblage de corps creux par sertissage vertical (simple) comportant un mandrin d'appui monté sur un support rotatif, un galet de sertissage composé d'au moins deux éléments, à savoir un galet support et un galet d'écrasement, ces deux galets étant montés de manière à pouvoir être déplacés en direction du mandrin d'appui pour effectuer un prépliage des bords par déformation entre deux lèvres fixes, ces deux galets étant également rapprochables l'un de l'autre pour permettre le sertissage des bords des éléments à assembler, l'un au moins des éléments, galets et mandrin, précités pouvant être entraîné en rotation par un organe moteur, caractérisé en ce qu'il comporte au moins trois points d'appui, de préférence quatre points d'appui pour les éléments à assembler, qui sont déplaçables en fonction de la dimension de ceux-ci, lesdits points d'appui étant disposés sur deux bras de part et d'autre des éléments à assembler, en ce que lesdits bras sont orientables et réglables en fonction de la dimension des éléments à assembler et fixés au bâti de la machine, lesdits bras consistant en une première partie sur laquelle est articulée une deuxième partie dont l'extrémité opposée à la partie comporte une articulation de laquelle partent deux branches orientables se terminant chacune par un petit galet servant de point d'appui aux bords en U de l'élément à assembler et en ce que le mandrin d'appui est monté sur un support rotatif affectant une forme adéquate permettant la rotation d'éléments courbes présentant un angle allant jusqu'à 45° et plus.

Suivant l'invention, l'opérateur dépose les éléments à assembler l'un sur l'autre sur les points d'appui de telle sorte que le mandrin d'appui soit appliqué contre la surface intérieure adjacente aux joints des deux éléments à assembler. Ensuite, on amène le galet de sertissage composé d'au moins deux pièces contre la paroi extérieure des éléments à assembler de manière à écraser et sertir les bords des éléments.

En général, il suffit que le galet de support soit entraîné par un moteur, les autres éléments tels que le mandrin et les pièces à assembler étant entraînés par frottement.

Dans le cas où cet entraînement ne suffirait pas, on peut entraîner le mandrin d'appui et le galet de sertissage de telle manière que les vitesses circonférencielles soient identiques.

Suivant l'invention, les éléments à assembler doivent présenter des extrémités particulières. L'extrémité de l'un des éléments à assembler présente par exemple un bord replié perpendiculairement à la paroi ; l'autre élément présente une section affectant globalement la forme d'un U dans lequel s'emboîte le premier élément, les montants du U étant repliés et sertis sur le bord du premier élément.

Un mode d'exécution préféré du dispositif selon l'invention est décrit dans les figures annexées dans lesquelles :

— la figure 1 représente une vue schématique du dispositif de l'invention suivant un premier mode d'exécution ;

— la figure 2 est une vue en plan schématique de la figure 1.

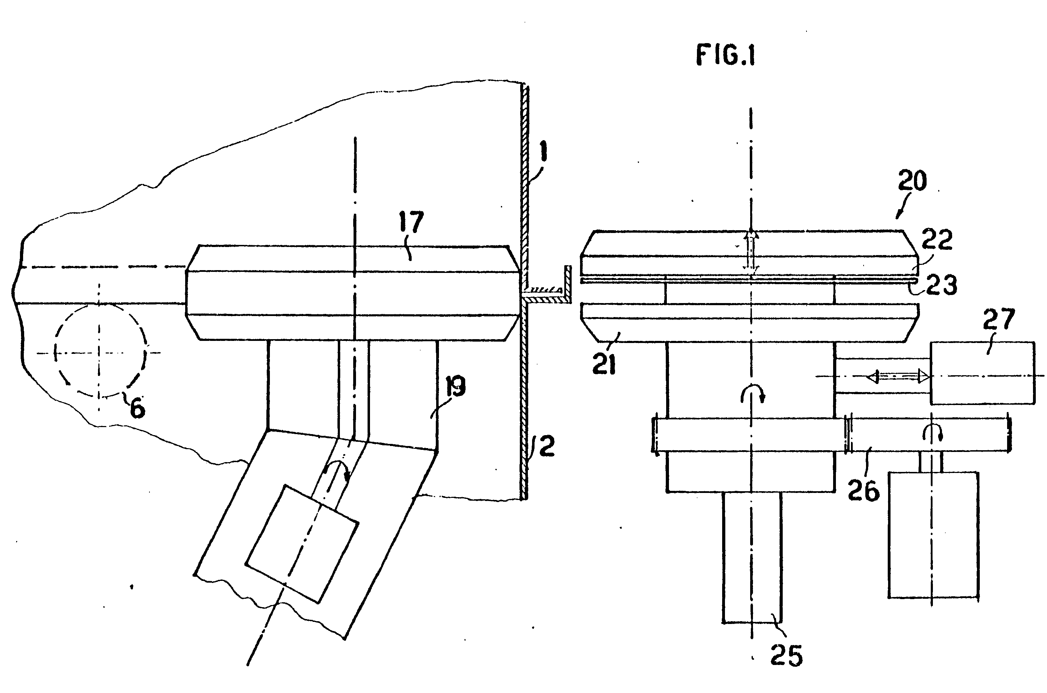

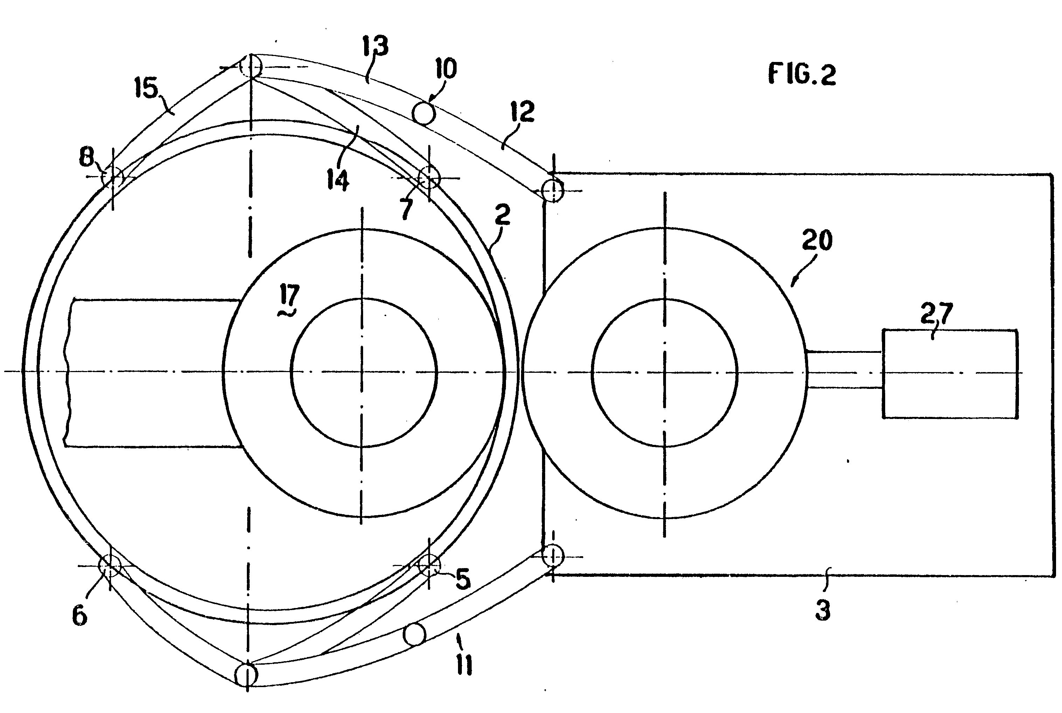

A la figure 1, les éléments à assembler 1 et 2 présentant une section adéquate reposent sur au moins trois points d'appui. Suivant un mode d'exécution particulièrement préféré, les éléments à assembler 1 et 2 reposent sur quatre points d'appui 5, 6, 7 et 8 (figure 2) disposés sur deux bras 10 et 11 orientables et réglables en fonction des dimensions, à savoir le diamètre, des éléments à assembler, les bras 10 et 11 étant fixés aux parties 3 de la machine.

Avantageusement, les bras 10 et 11 sont constitués par au moins deux parties assemblées par une articulation. De préférence, ils consistent chacun en une première partie 12 sur laquelle est articulée une deuxième partie 13 dont l'extrémité opposée à la partie 12 comporte une articulation de laquelle partent deux branches orientables 14 et 15 se terminant par un petit galet (5, 6, 7, 8) servant de point d'appui aux bords en U de l'un des éléments à assembler.

Le mandrin d'appui 17 est disposé à l'intérieur des éléments 1 et 2 et est appliqué contre la surface intérieure desdits éléments. Le galet d'appui 17 est monté sur un support rotatif 19 affectant une forme particulière adéquate permettant la rotation d'éléments courbes 2 possédant un angle allant jusqu'à 45° ou plus.

Suivant l'invention, le galet de sertissage 20 est composé d'au moins deux galets parallèles, à savoir un galet support 21 et un galet de sertissage ou d'écrasement 22 ayant sensiblement le même diamètre que le galet 21. Suivant un mode d'exécution particulièrement préféré, il comporte encore un troisième galet de même orientation, à savoir un galet de prépliage 23. Ce dernier consiste avantageusement en un matériau élastique. Avantageusement, les galets supports 21 et de prépliage 23 ou d'écrasement 22 peuvent être écartés l'un de l'autre suivant leur axe commun, au moyen d'un vérin 25, par exemple. Le galet de sertissage 20 comprenant les différentes parties 21, 22, 23 est avantageusement entraîné par un organe moteur 26.

En fonctionnement, lorsque les éléments à assembler 1 et 2 sont disposés correctement et lorsque les galets 21 et 23 sont écartés, on amène le galet de sertissage 20 contre les éléments à assembler au moyen d'un vérin 27. L'écartement des galets et/ou la présence du galet de prépliage 23 permettent d'effectuer une ou plusieurs encoches dans le bord en forme de U par déformation entre deux lèvres. Ces encoches empêchent le mouvement relatif d'un élément par rapport à l'autre, lors du sertissage (écrasement) en continu effectué ultérieurement.

Ensuite, les galets 21 et 23 et/ou 22 sont rapprochés l'un de l'autre afin d'écraser au maximum le montant du U sur le bord de l'autre élément, entre les deux faces parallèles des galets, et le galet 20 est entraîné en rotation par l'organe moteur 26 pour faire une ou plusieurs fois le tour des éléments à symétrie de révolution.

Suivant les dimensions des éléments à assembler 1 et 2 et l'épaisseur de la paroi desdits éléments, il n'est pas nécessaire d'effectuer plusieurs encoches de prépliage. Il suffit alors de faire une amorce de sertissage en écrasant le montant du U sur le bord plié de l'autre élément, avant d'entraîner le galet 20 en rotation.

Le mandrin d'appui 17 n'est, avantageusement pas entraîné par un organe moteur mais par le frottement entre lui, la paroi des éléments à assembler et le galet 20. Si nécessaire, on peut malgré tout prévoir un entraînement individuel du galet 17.

Le dispositif de la présente invention est très efficace et rapide dans l'exécution des assemblages par sertissage. Notons encore que le galet support ne sert qu'à la réaction pour l'effort d'écrasement et qu'il ne supporte pas les éléments à assembler 1, 2, lors des autres opérations.

Ainsi, le dispositif de l'invention peut, par exemple, être intégré dans une chaîne de fabrication comportant, en outre, en amont, une moulureuse permettant de former les bords nécessaires.

Il faut noter que le dispositif de l'invention présente une construction telle qu'il peut également servir à assembler des éléments qui ne sont pas de symétrie à révolution, comme un réservoir par exemple. Dans ce cas, le support 19 est rotatif et le vérin 27 présente une course telle qui permet de suivre la forme de l'assemblage à l'endroit du joint.

**Revendications**

1. Dispositif d'assemblage de corps creux par sertissage vertical (simple) comportant un mandrin d'appui (17) monté sur un support rotatif (19), un galet de sertissage (20) composé d'au moins deux éléments (21, 22), à savoir un galet support (21) et un galet d'écrasement (22), ces deux galets étant montés de manière à pouvoir être déplacés en direction du mandrin d'appui (17) pour effectuer un prépliage des bords par déformation entre deux lèvres fixes, ces deux galets (21, 22) étant également rapprochables l'un de l'autre pour permettre le sertissage des bords des éléments à assembler (1, 2), l'un au moins des éléments, galets et mandrin, précités (17, 21, 22) pouvant être entraîné en rotation par un organe moteur, caractérisé en ce qu'il comporte au moins trois points d'appui (5, 6, 7, 8), de préférence quatre points d'appui pour les éléments à assembler (1, 2), qui sont déplaçables en fonction de la dimension de ceux-ci, lesdits points d'appui étant disposés sur deux bras (10, 11) de part et d'autre des éléments à assembler (1, 2), en ce que lesdits bras sont orientables et réglables en fonction de la dimension des éléments à assembler et fixés au bâti (3) de la machine, lesdits bras consistant en une première partie (12) sur laquelle est articulée une deuxième partie (13) dont l'extrémité opposée à la partie (12) comporte une articulation de laquelle partent deux branches orientables (14, 15) se terminant chacune par un petit galet (5, 6, 7, 8) servant de point d'appui aux bords en U de l'élément à assembler et en ce que le mandrin d'appui (17) est monté sur un support rotatif (19) affectant une forme adéquate permettant la rotation d'éléments (2) courbes présentant un angle allant jusqu'à 45° et plus.

2. Dispositif suivant l'une quelconque des revendications précédentes caractérisé en ce que le galet de sertissage (20) est composé d'au moins deux galets parallèles, à savoir un galet support (21) et un galet de sertissage ou d'écrasement (22) ayant sensiblement le même diamètre que le précédent.

3. Dispositif suivant la revendication 2 caractérisé en ce que le galet de sertissage (20) comporte encore un troisième galet, un galet de prépliage (23) parallèle aux deux autres et de même axe que ceux-ci, ledit galet de prépliage (23) consistant en une matière élastique.

4. Dispositif suivant l'une quelconque des revendications précédentes caractérisé en ce que le galet de sertissage (20) est déplacé parallèlement à son axe par un vérin (27).

5. Dispositif suivant l'une quelconque des revendications précédentes caractérisé en ce que les galets (21, 22 ou 23) du galet de sertissage sont rapprochés l'un de l'autre au moyen d'un deuxième vérin (25).

6. Dispositif suivant l'une quelconque des revendications précédentes caractérisé en ce qu'on effectue le rapprochement du galet support (21) et du galet d'écrasement (22) au moyen d'un vérin.

7. Dispositif suivant l'une quelconque des revendications précédentes, caractérisé en ce que seuls les galets supports (21) et d'écrasement (22) sont entraînés en rotation par un organe moteur (26).

8. Dispositif suivant la revendication 1 caractérisé en ce que le mandrin d'appui s'adapte à une forme quelconque des éléments à assembler et que les galets de sertissage sont pressés contre ledit mandrin au moyen d'un vérin qui suit la forme des éléments à assembler à l'endroit du joint.

## Claims

1. A device for assembly of hollow bodies by (single) vertical crimping which includes a bearer mandrel (17) mounted upon a rotary support (19), a crimping roller (20) composed of at least two members (21, 22), namely, a supporting roller (21) and a crusher roller (22), these two rollers being mounted so as to be able to be displaced in the direction of the bearer mandrel (17) in order to carry out a prefolding of the edges by deformation between two fixed lips, these two rollers (21, 22) being likewise able to be brought together in order to enable crimping of the edges of the pieces (1, 2) to be assembled, at least one of the aforesaid members, the rollers and mandrel (17, 21, 22) being able to be driven in rotation by a driving member, characterized in that for the pieces (1, 2) to be assembled it includes at least three bearer points (5, 6, 7, 8), preferably four bearer points, which are movable as a function of the size of the said pieces, the said bearer points being arranged upon two arms (10, 11) on opposite sides of the pieces (1, 2) to be assembled, in that the said arms are able to be aligned and adjusted as a function of the size of the pieces to be assembled and are attached to the frame (3) of the machine, the said arms consisting of a first portion (12) onto which is hinged a second portion (13) the end of which remote from the portion (12) includes a hinge from which leave two alignable branches (14, 15) each terminating in a little roller (5, 6, 7, 8) serving as a bearer point for the U-shaped edges of the piece to be assembled, and in that the bearer mandrel (17) is mounted upon a rotary support (19) which assumes an appropriate shape to enable rotation of curved parts (2) which exhibit an angle of as much as 45° and over.

2. A device as in any one of the preceding Claims, characterized in that the crimping roller (20) is composed of at least two parallel rollers namely, a supporting roller (21) and a crimping or crusher roller (22) having substantially the same diameter as the former.

3. A device as in Claim 2, characterized in that the crimping roller (20) further includes a third roller, a prefolding roller (23) parallel with the other two and having the same axis as they, the said prefolding roller (23) consisting of resilient matter.

4. A device as in any one of the preceding Claims, characterized in that the crimping roller (20) is displaced in parallel with its axis by a jack (27).

5. A device as in any one of the preceding Claims, characterized in that the rollers (21, 22 or 23) of the crimping roller are brought together by means of a second jack (25).

6. A device as in any one of the preceding Claims, characterized in that the bringing together of the supporting roller (21) and the crusher roller (22) is effected by means of a jack.

7. A device as in any one of the preceding Claims, characterized in that only the supporting roller (21) and the crusher roller (22) are driven in rotation by a driving member (26).

8. A device as in Claim 1, characterized in that the bearer mandrel may be adapted to any shape of the pieces to be assembled, and that the crimping rollers are pressed against the said mandrel by means of a jack which follows the shape of the pieces to be assembled at the place of the joint.

## Patentansprüche

1. Vorrichtung zum Zusammenfügen von Hohlkörpern durch vertikales (einfaches) Falzen, mit einem auf einer Drehhalterung (19) befestigten Stützdorn (17), einer Bördelrolle (20), die aus mindestens zwei Elementen (21, 22) zusammengesetzt ist, nämlich einer Stützrolle (21) und einer Quetschrolle (22), wobei diese zwei Rollen derart angebracht sind, daß sie in Richtung des Stützdorns (17) verschoben werden können, um ein Vorfalzen der Ränder durch Deformation zwischen zwei festen Lippen zu bewirken, wobei diese beiden Rollen (21, 22) auch einander nähergebracht werden können, um das Falzen der Ränder der zusammenzufügenden Elemente (1, 2) zu erlauben, wobei mindestens eines der genannten Elemente, Rollen und Dorn, (17, 21, 22) durch ein Motororgan in Rotation gebracht werden kann, dadurch gekennzeichnet, daß sie mindestens drei Stützpunkte (5, 6, 7, 8), vorzugsweise vier Stützpunkte, für die zusammenzufügende Elemente (1, 2) aufweist, die je nach ihrer Größe verschiebbar sind, wobei die Stützpunkte auf zwei Armen (10, 11) auf beiden Seiten der zusammenzufügenden Elemente (1, 2) angeordnet sind, daß die Arme je nach der Größe der zusammenzufügenden Elemente einstellbar und regulierbar und am Gehäuse (3) der Maschine angebracht sind, wobei die Arme aus einem ersten Teil (12) bestehen, auf welchem ein zweiter Teil (13) gelenkig gelagert ist, dessen dem Teil (12) gegenüberliegendes Ende ein Gelenk aufweist, von welchem zwei einstellbare Schenkel (14, 15) ausgehen, die jeweils in eine kleine Rolle (5, 6, 7, 8) auslaufen, die in einem U den Rändern des zusammenzufügenden Elementes als Stützpunkt dienen, und daß der Stützdorn (17) auf einer Drehhalterung (19) angebracht ist unter Verwendung einer geeigneten Form, welche die Drehung der gekrümmten Elemente (2) erlaubt, welche einen Winkel bilden, der bis zu 45° und mehr geht.

2. Vorrichtung nach einem der vorhergehenden Ansprüche, dadurch gekennzeichnet, daß die Bördelrolle (20) aus mindestens zwei parallelen Rollen zusammengesetzt ist, nämlich einer Stützrolle (21) und einer Falz- oder Quetschrolle (22), die im wesentlichen denselben Durchmesser wie die vorhergehende hat.

3. Vorrichtung nach Anspruch 2, dadurch gekennzeichnet, daß die Bördelrolle (20) noch eine dritte Rolle aufweist, eine Vorfalzrolle (23) parallel zu den zwei anderen und mit derselben Achse wie diese, wobei die Vorfalzrolle (23) aus einem elastischen Material besteht.

4. Vorrichtung nach einem der vorhergehenden Ansprüche, dadurch gekennzeichnet, daß die Bördelrolle (20) durch einen Stellantrieb (27) parallel zu ihrer Achse verschoben wird.

5. Vorrichtung nach einem der vorhergehenden Ansprüche, dadurch gekennzeichnet, daß die Rollen (21, 22 oder 23) der Bördelrolle einander mittels eines zweiten Stellantriebes (25) nähergebracht werden.

6. Vorrichtung nach einem der vorhergehenden Ansprüche, dadurch gekennzeichnet, daß man die Annäherung der Stützrolle (21) und der Quetschrolle (22) mittels eines Stellantriebes ausführt.

7. Vorrichtung nach einem der vorhergehenden Ansprüche, dadurch gekennzeichnet, daß nur die Stütz- (21) und die Quetschrolle (22) durch ein Motororgan (26) in Drehung gebracht werden.

8. Vorrichtung nach Anspruch 1, dadurch gekennzeichnet, daß der Stützdorn sich der jeweiligen Form der zusammenzufügenden Elemente anpaßt und daß die Bördelrollen gegen den Dorn mittels eines Stellantriebes gedrückt werden, welcher der Form der zusammenzufügenden Elemente an der Verbindungsstelle folgt.

FIG.1

FIG.2